(19) Europäisches Patentamt
European Patent Office
Office européen des brevets

(11) **EP 2 239 545 B1**

(12) **EUROPEAN PATENT SPECIFICATION**


(45) Date of publication and mention of the grant of the patent:
**01.02.2012 Bulletin 2012/05**

(21) Application number: **08870886.2**

(22) Date of filing: **03.12.2008**

(51) Int Cl.:
***G01F 1/712*** *(2006.01)* ***G01F 1/704*** *(2006.01)*
***G01F 1/708*** *(2006.01)* ***G01M 15/04*** *(2006.01)*
***G01M 15/10*** *(2006.01)*

(86) International application number:
**PCT/JP2008/071938**

(87) International publication number:
**WO 2009/090805 (23.07.2009 Gazette 2009/30)**


(54) **FLUID MEASURING DEVICE**

FLÜSSIGKEITSMESSGERÄT

DISPOSITIF DE MESURE DE FLUIDE


(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **17.01.2008 JP 2008008457**

(43) Date of publication of application:
**13.10.2010 Bulletin 2010/41**



(73) Proprietor: **Mitsubishi Heavy Industries, Ltd.**
**Tokyo 108-8215 (JP)**

(72) Inventors:
- **MUTA, Kenji**
**Yokohama-shi**
**Kanagawa 236-8515 (JP)**
- **TANOURA, Masazumi**
**Yokohama-shi**
**Kanagawa 236-8515 (JP)**
- **TAKITA, Atsushi**
**Yokohama-shi**
**Kanagawa 236-8515 (JP)**
- **UENO, Daishi**
**Tokyo 108-8215 (JP)**
- **AOKI, Tadashi**
**Tokyo 108-8215 (JP)**
- **SEKIYA, Mitsunobu**
**Yokohama-shi**
**Kanagawa 226-8507 (JP)**

(74) Representative: **Kopf, Korbinian Paul**
**Maiwald Patentanwalts GmbH**
**Elisenhof**
**Elisenstrasse 3**
**80335 München (DE)**



(56) References cited:
**DE-A1-102006 027 422** **JP-A- 59 048 621**
**JP-A- 2004 170 357** **JP-A- 2007 333 655**
**US-A- 4 201 083**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



EP 2 239 545 B1

## Description

### TECHNICAL FIELD

The present invention relates to a fluid measuring device that measures a flow velocity or the like of a fluid such as exhaust gas emitted from an internal combustion engine, for example.

### BACKGROUND ART

In order to lower fuel consumption and lower emissions of an engine, it is necessary to analyze one combustion cycle of the engine in detail. As a result, it is effective to measure in detail changes such as in the temperature and concentrations of the exhaust gas (combustion gas) emitted from the engine. Conventionally, a measuring device has been known that can detect in detail the temperature and concentrations of combustion gas using laser light (e.g., refer to Patent Document 1).

Patent Document: Japanese Patent No. 3943853

US 4 201 083 discloses a fluid measuring device comprising either one pair or two pairs of detecting sections, the detecting sections of each pair being separated by the same distance, and the detecting sections being arranged on a channel in which fluid flows, and further comprising a calculating section for determining the velocity of the fluid based on the distance.

DE 10 2006 027 422 A1 discloses a device for monitoring an exhaust gas turbocharger of a combustion engine comprising a sound transducer adapted for recording rotary/speed-dependent turbocharger operational sound, which sound transducer is connected to an electronic device for frequency analysis for outputting a turbocharger rotary speed signal.

JP 59 048 621 A discloses a fluid measuring device comprising two sensors arranged at a proper distance in a passage of an exhaust gas the velocity of which is detected utilizing a mutual correlation of fluctuating wave forms of outputs of the two sensors.

JP 2007333655 A discloses a gas analyzer comprising first and second gas concentration detection means provided at a distance on a gas channel, and a flow velocity computation means for determining the flow velocity of the gas on the basis of detection values of gas concentrations of the first and second gas concentration detection means.

JP 2004170357 A discloses an exhaust gas measuring device having upstream and downstream side sensors arranged at an interval in an exhaust pipe connected to an automobile engine. An operation circuit obtains a phase difference between signals of the sensors, obtains a gas flow rate, and obtains a flow rate.

### DISCLOSURE OF THE INVENTION

#### Problems to be Solved by the Invention

Herein, if a gas concentration and flow velocity of exhaust gas are known, the mass per time of each gas contained in the exhaust gas, gross emissions per mode traveling, or the like can be obtained. As a result, in order to lower fuel consumption and lower emissions of an engine, in addition to changes in the temperature and concentrations of exhaust gas, it is important to measure in detail the flow velocity of the exhaust gas. However, a method capable of measuring the flow velocity and flow rate of exhaust gas of high temperature in detail has not been proposed.

Therefore, a problem of the present invention is to provide a fluid measuring device capable of measuring the flow velocity of a fluid in detail.

#### Means for Solving the Problems

The present invention solves the problem by way of the solution indicated in claim 1. It should be noted that, although references symbols corresponding to embodiments of the present invention are assigned and explained in order to facilitate understanding, it is not limited thereto. Embodiments of the invention are indicated in the dependent claims.

According to the invention, a fluid measuring device (10) includes: detecting sections (30, 40) that are provided in plurality in a state separated from each other on a channel (22) in which a fluid flows, and detect a parameter that changes in response to a change in a state of the fluid; and a calculating section (50) that calculates a flow velocity of the fluid based on a time shift (AT) in a change in the parameter detected by a pair of the detecting sections, and a distance (L) along the channel between the pair of the detecting sections.

According to a second aspect of the invention, in the fluid measuring device (10) as described in the first aspect, the calculating section (50) calculates a flow rate of the fluid based on the flow velocity of the fluid and a cross-sectional area of the channel (22).

According to a third aspect, in the fluid measuring device (10) as described in the first or second aspect, at least one of a temperature of the fluid, a concentration of a substance contained in the fluid, and an intensity of light absorbed, scattered, and irradiated by the substance is included in a parameter that changes in response to a change in a state of the fluid.

According to a fourth aspect, in the fluid measuring device (10) as described in any one of the first to third aspects, the detecting section (30, 40) includes an irradiation portion (31, 41) that irradiates laser light into the fluid and a light-receiving portion (32, 42) that receives the laser light having transmitted or scattered through the fluid, and detects the parameter based on an intensity ratio of irradiated light irradiated by the irradiation portion and transmitted light received by the light-receiving portion.

According to a fifth aspect of the invention, in the fluid measuring device (10) as described in any one of the first to fourth aspects, the calculating section (50) evaluates a time shift in a change in a parameter by comparing like waveform signals, based on the change in the parameter detected by the pair of the detecting sections (30, 40).

According to a sixth aspect of the invention, in the fluid measuring device (10) as described in any one of the first to fifth aspects, the calculating section (50) evaluates the time shift in the change in the parameter by calculating a correlation of the change in the parameter detected by the pair of the detecting sections (30, 40).

According to the invention, in the fluid measuring device (110) as described in any one of the first to sixth aspects, at least three of the detecting sections (30, 40, 60) are provided, and the calculating section (50) determines a combination of two among the at least three of the detecting sections provided according to a flow velocity of the fluid.

According to an eight aspect of the invention, the fluid measuring device (210) as described in any one of the first to sixth aspects includes a means (70), which is disposed in the channel (22) in which the fluid flows upstream of the detecting sections (30, 40), for causing a concentration of a substance contained in the fluid to fluctuate.

It should be noted that the configuration explained by assigning reference symbols may be refined as appropriate, and at least a portion may be substituted with another constituent.

## Effects of the Invention

According to the present invention, the following effects can be obtained.

(1) Since the fluid measuring device according to the present invention detects each parameter that changes in response to a change in the state of the fluid by a pair of detecting sections, and obtains a flow velocity based on the time shift (time lag) between the change in the parameter detected by the detecting section on an upstream side and a change in the parameter detected by the detecting section on a downstream side, the flow velocity of the fluid can be measured in detail.

(2) It is convenient since the flow rate of fluid can be obtained together with the flow velocity of the fluid.

(3) The detecting section is a sensor of fast response type that measures parameters related to the fluid based on the intensity ratio or the like of irradiated light and transmitted light of the laser light; therefore, a change in a parameter of the fluid can be measured in detail, whereby the flow velocity of the fluid can be measured in detail. In addition, a change in a parameter can be reliably detected even if the fluid is at high temperature.

(4) At least three detecting sections are provided, and the variation in distance between the detecting sections is increased; therefore, the flow velocity thereof can be detected in detail irrespective of the flow velocity of the fluid.

(5) Since the revolution speed of the internal combustion engine is estimated based on a parameter related to the exhaust gas using the fact that a peak frequency of a power spectrum of a parameter related to the exhaust gas and that of a power spectrum of a combustion cycle of the internal combustion engine are corresponding, it can function also as a tachometer, and thus is convenient.

(6) Even in a case of the change in a parameter of the fluid itself being small and there being no change in the parameter, or a case in which the change in the parameter is systematic and thus specifying the time shift is difficult, the time shift can be easily specified by making a marker by causing the concentration of a substance contained in the fluid to fluctuate.

## BRIEF DESCRIPTION OF THE DRAWINGS

FIG. 1 is a view showing a velocity meter and an engine according to a first embodiment;

FIG. 2 is a view showing a structure of a measurement cell provided to the velocity meter shown in FIG. 1;

FIG. 3 is graphs showing output from the measurement cell when the engine revolution speed is 2400 $min^{-1}$;
FIG. 4 is graphs showing output from the measurement cell when the engine revolution speed is 3600 $min^{-1}$;
FIG. 5 is charts showing waveform data of like measurement cells when the engine revolution speed is 2400 $min^{-1}$ by comparison;
FIG. 6 is charts showing waveform data of like measurement cells when the engine revolution speed is 3600 $min^{-1}$ by comparison;
FIG. 7 is charts showing power spectra of gas temperature and $H_2O$ concentration and a power spectrum of revolution speed (2400 $min^{-1}$) of an engine by comparison;
FIG. 8 is charts showing power spectra of $CO_2$ concentration and CO concentration and a power spectrum of revolution speed (2400 $min^{-1}$) of an engine by comparison;
FIG. 9 is a chart showing a power spectrum of $CH_4$ concentration and a power spectrum of revolution speed (2400 $min^{-1}$) of an engine by comparison;
FIG. 10 is charts showing power spectra of gas temperature and $H_2O$ concentration and a power spectrum of revolution speed (3600 $min^{-1}$) of an engine by comparison;
FIG. 11 is charts showing power spectra of $CO_2$ concentration and CO concentration and a power spectrum of revolution speed (3600 $min^{-1}$) of an engine by comparison;
FIG. 12 is a chart showing a power spectrum of $CH_4$ concentration and a power spectrum of revolution speed (3600 $min^{-1}$) of an engine by comparison;
FIG. 13 is a view showing a velocity meter and an engine according to an embodiment of the invention; and
FIG. 14 is a view showing a velocity meter and an engine according to another embodiment.

EXPLANATION OF REFERENCE NUMERALS

10 Velocity meter
20 Engine
30 Measurement cell
40 Measurement cell
50 Calculating section

PREFERRED MODE FOR CARRYING OUT THE INVENTION

The present invention solves the problem of providing a fluid measuring device capable of measuring a flow velocity of a fluid in detail by providing a calculating section that calculates a flow velocity of the exhaust gas based on a time shift of output signals of a pair of measurement cells that measure the temperature and concentrations of the exhaust gas, and on a distance between the pair of measurement cells.

EMBODIMENTS

First Embodiment

A velocity meter 10, which is a first embodiment of a fluid measuring device useful for understanding the present invention, is explained with reference to the drawings. The fluid of the measurement target by the velocity meter 10 of the present embodiment is exhaust gas that is emitted from a four-cycle gasoline engine 20 (hereinafter referred to simply as engine 20), which is an internal combustion engine.

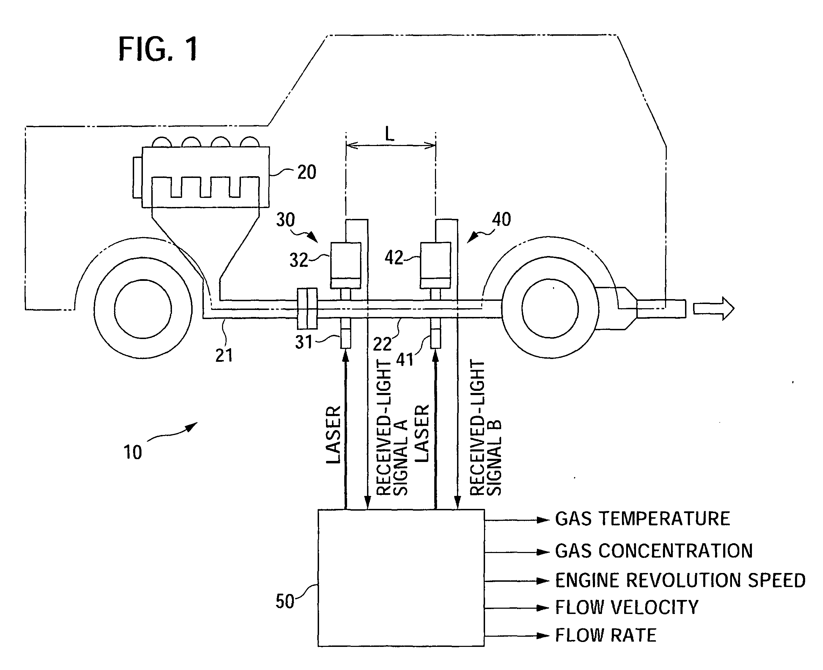

FIG. 1 is a view showing the velocity meter 10 and the engine 20 of the embodiment.

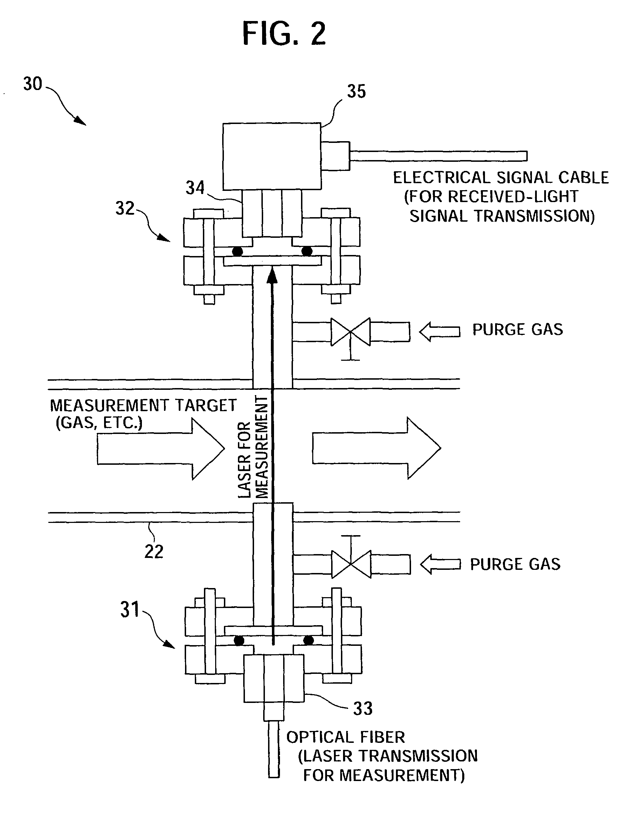

FIG. 2 is a view showing a structure of a measurement cell 30 provided to the velocity meter 10 shown in FIG. 1.

The engine 20 obtains motive force by combusting a mixed gas of gasoline and air inside cylinders, and various gases such as steam ($H_2O$), carbon monoxide gas (CO), carbon dioxide gas ($CO_2$), and methane gas ($CH_4$) are contained in the exhaust gas thereof. The exhaust gas emitted from the engine 20 is introduced to exhaust plumbing 22 through an exhaust manifold 21, and passes through the exhaust plumbing 22 and is exhausted to the atmosphere.

The velocity meter 10 is provided with a pair of measurement cells 30 and 40 that are provided in the exhaust plumbing 22, and a calculating section 50 that calculates a flow velocity of exhaust gas based on a time shift of output signals of this pair of measurement cells 30 and 40 and on a distance between the pair of measurement cells 30 and 40. The measurement cell 30 is provided on an upstream side (engine 20 side) of an exhausting direction of the exhaust gas relative to the measurement cell 40.

In a case in which laser light of a specific wavelength is irradiated into the exhaust gas, the measurement cells 30 and 40, which are detecting sections, apply a characteristic (laser absorption spectroscopy) whereby laser light is absorbed due to vibrational-rotational transition of molecules, and measures gas concentration based on the intensity ratio of incident light to transmitted light. In addition, the measurement cells 30 and 40, for example, are made so as to be able to measure the temperature of the gas based on the concentration of $H_2O$. Moreover, since the absorption coefficient of laser light depends on the temperature of the exhaust gas and the pressure of the exhaust gas, it is necessary to measure the pressure of the exhaust gas; however, the pressure of the exhaust gas is measured by a pressure sensor, which is not illustrated, provided inside the channel. The reference symbol L assigned to the distance along the exhaust plumbing 22 between the pair of measurement cells 30 and 40 in FIG. 1 will be explained below.

The measurement cells 30 and 40 are substantially the same except for the arrangement positions thereof being different; therefore, only the structure of the measurement cell 30 will be explained. As shown in FIG. 2, the measurement cell 30 is provided with an irradiation portion 31 that irradiates laser light and a light-receiving portion 32 that receives laser light (transmitted light) irradiated from the irradiation portion 31 and transmitted through the exhaust gas.

A tip of the irradiation portion 31 and the light-receiving portion 32 are each formed in a tube shape, and are inserted through a hole provided in the exhaust plumbing into the exhaust plumbing 22. Purge gas is supplied in a portion formed in this tube shape, whereby fouling of an irradiation window and a light-receiving window due to exhaust gas flowing thereinto is prevented. In the measurement cell 30, the irradiation portion 31 irradiates a plurality of laser beams having different oscillation timing through a light-transmission optical system 33. This laser light transmits through the exhaust gas, and the light receiving portion 32 detects this transmitted light via a light-receiving optical system 34. The light-receiving portion 32 is provided with a signal processing circuit 35 that converts the laser light thus received to an electrical signal (analog signal), and this electrical signal is input to the calculating section 50. The calculating section 50 generates waveform data (described later) by performing A/D conversion on this electrical signal.

The exhaust gas emitted from the engine 20 has a temperature, gas concentrations, and the like that pulsate in substantially consistent cycles corresponding to the combustion cycles of the engine 20. The measurement cells 30 and 40 of the present embodiment have a responsiveness of no more than 1 ms, and are made so as to be able to measure changes in gas concentration and temperature of the exhaust gas that is pulsating in detail, for example.

It should be noted that, although an example is illustrated in FIG. 1 of measuring the flow velocity of exhaust gas emitted from the engine 20 equipped to a full-size car, measurement of the flow velocity of exhaust gas is not limited thereto, and may be performed on a stand-alone engine 20 (engine bench testing).

A method for measuring flow velocity with the velocity meter 10 of the present embodiment will be specifically explained by referring to test data. The test was performed using a one-cylinder four-cycle engine under the two conditions of 2400 $min^{-1}$ (2400 rpm) and 3600 $min^{-1}$ (3600 rpm).

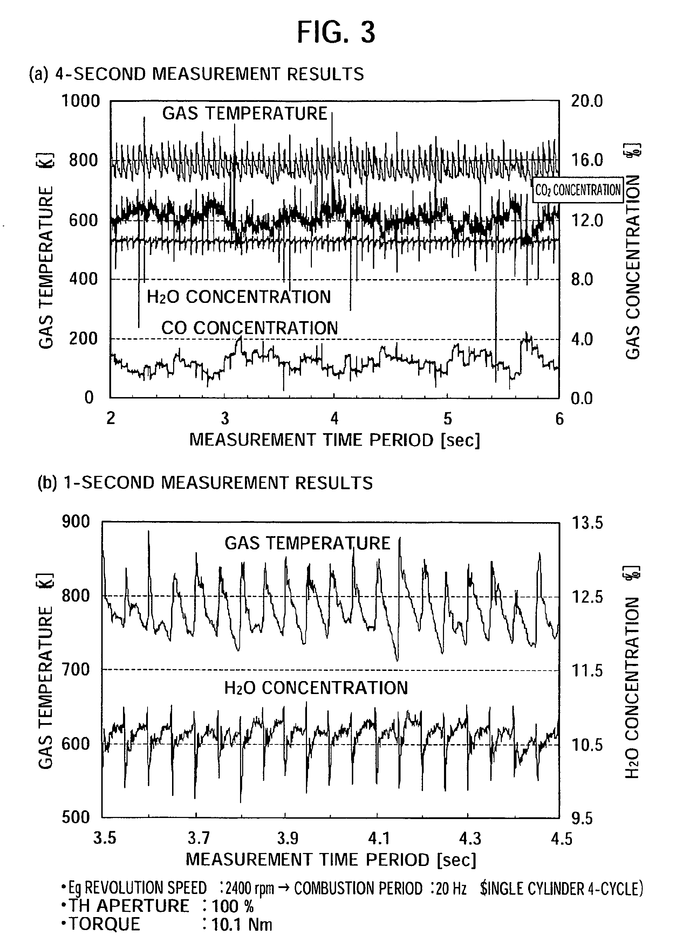

FIG. 3 is waveform data generated based on the output of the measurement cell 30 when the revolution speed is 2400 $min^{-1}$, with (a) and (b) showing 4-second measurement results and 1-second measurement results, respectively.

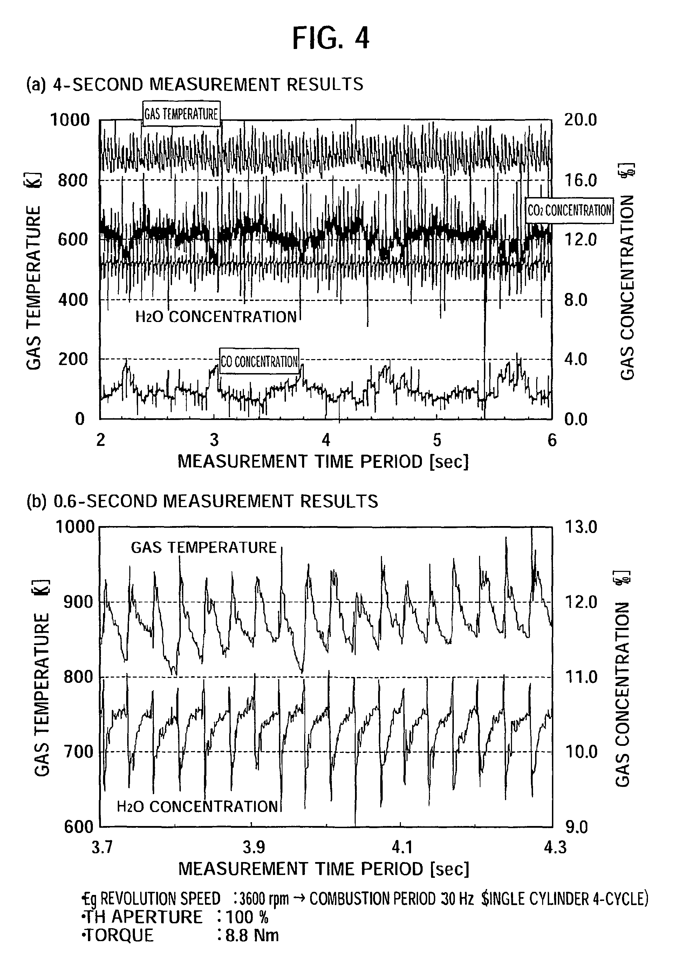

FIG. 4 is waveform data generated based on the output of the measurement cell 30 when the revolution speed is 3600 $min^{-1}$, with (a) and (b) showing 4-second measurement results and 0.6-second measurement results, respectively.

As shown in FIGS. 3 and 4, the gas temperature, $CO_2$ concentration, $H_2O$ concentration, and CO concentration of the exhaust gas each pulsate at a substantially constant period. It should be noted that, although omitted in these figures, the $CH_4$ concentration also pulsates similarly. For example, when the revolution speed of the engine 20 is 2400 $min^{-1}$, the gas temperature and the $H_2O$ concentration each pulsate twenty times in one second (refer to FIG. 3(b)), and the pulsation period thereof is 0.05 seconds (50 ms). In contrast, the measurement cells 30 and 40 of the present embodiment have a response speed of no more than 1 ms, and thus data sampling of at least approximately fifty times is possible when the gas temperature and $H_2O$ concentration changes in one cycle. Therefore, the change in a parameter such as a gas concentration can be captured in detail. It should be noted that, when the revolution speed of the engine is 3600 $min^{-1}$, although the pulsation period becomes 33.3 ms, even in this case, the change in a parameter such as a gas concentration can be sufficiently captured in detail.

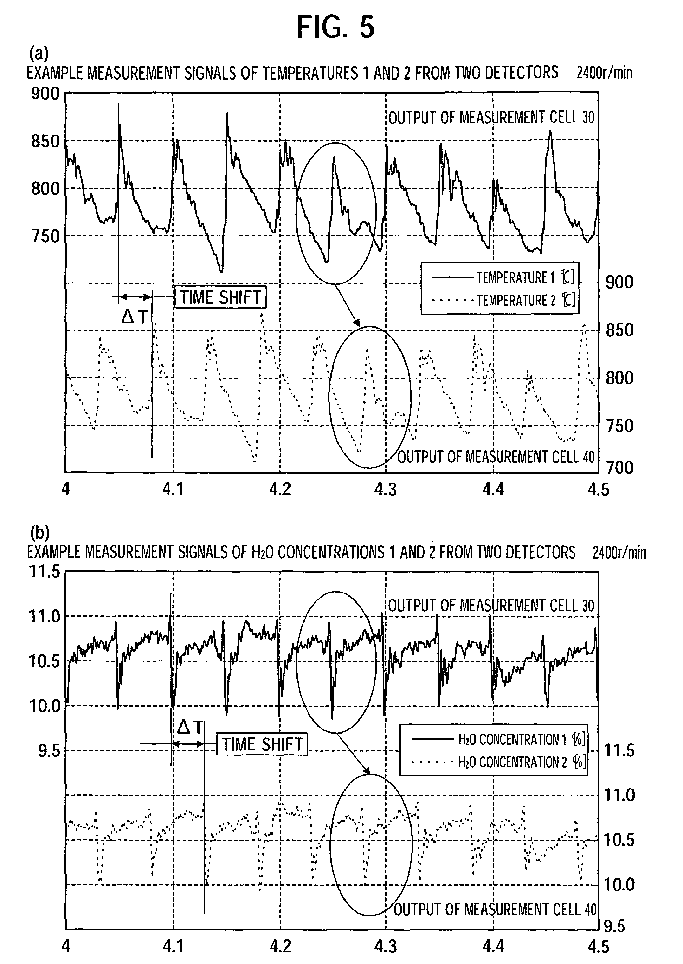

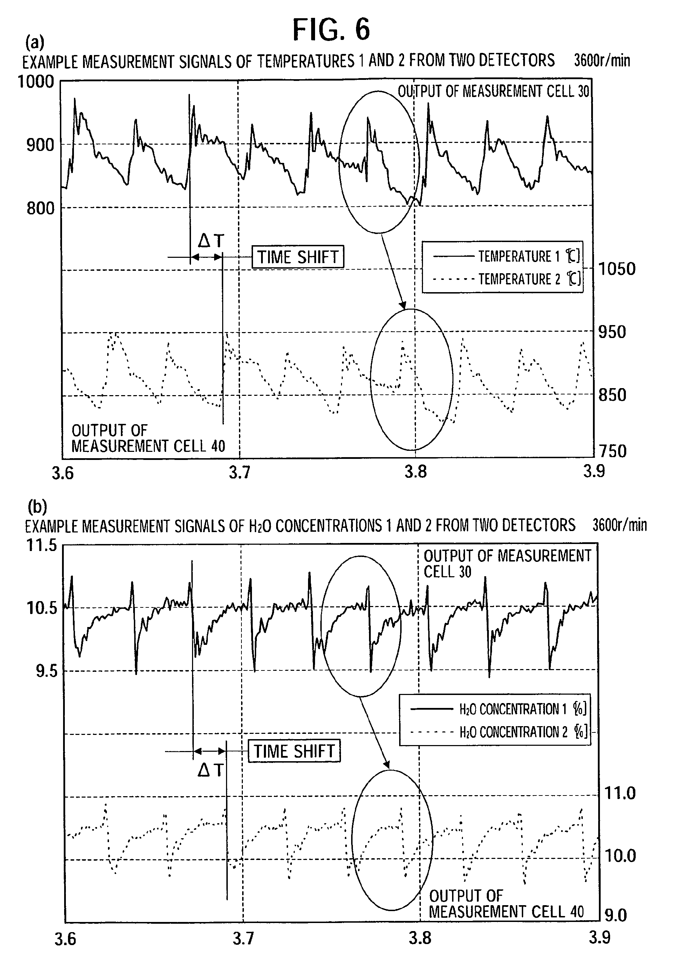

FIG. 5 is charts showing waveform data generated based on the output of the measurement cell 30 and waveform data generated based on the output of the measurement cell 40 when the engine revolution speed is 2400 $min^{-1}$ by comparison, with (a) and (b) showing the gas temperature and $H_20$ concentration by comparison, respectively. In addition, FIG. 6 is charts showing waveform data generated based on the output of the measurement cell 30 and waveform data generated based on the output of the measurement cell 40 when the engine revolution speed is 3600 $min^{-1}$ by comparison, with (a) and (b) showing the gas temperature and $H_2O$ concentration by comparison, respectively.

The calculating section 50 obtains the time shift of these waveforms by comparing the waveform generated based on the output of the measurement cell 40 with the waveform data generated based on the output of the measurement cell 30. It should be noted that the waveform data generated based on the outputs of the measurement cells 30 and 40 similarly pulsate also for gases in addition to gas temperature and $H_2O$, as shown in FIGS. 3 and 4; therefore, when obtaining the time shift, the waveform data of gas concentrations of other gases may be used.

Since the measurement cell 30 and the measurement cell 40 are substantially the same matter, the waveform signals showing the gas temperature and $H_2O$ concentration are substantially the same waveforms, as shown in each chart of FIGS. 5 and 6. However, the measurement cell 40 is disposed further downstream than the measurement cell 30; therefore, a time shift (phase difference $\Delta T$) between the output of the measurement cell 30 and the output of the measurement cell 40 occurs. The calculating section 50 evaluates the phase difference $\Delta T$ from these waveform data, and calculates the velocity of exhaust gas based on this phase difference $\Delta T$ and the distance L between the measurement cells 30 and 40.

In addition, the velocity meter 10 of the present embodiment is made so that the calculating section 50 obtains the volume (flow rate) of exhaust gas flowing per time based on a cross-sectional area of the exhaust plumbing 22 that had been measured beforehand and the exhaust gas flow velocity, and thus has a function as a flow meter. This enables the emitted mass per time such as of $CO_2$ gas, for example, contained in the exhaust gas to be found.

It should be noted that, the method for evaluating the time shift of the outputs of the measurement cells 30 and 40 is not limited to the method of comparing the waveform data of signals as described above and, for example, a method for analytically calculating a cross-correlation of measurement signals based on formula 1 shown below may be used. If the output signal from the measurement cell 30 is set as $S_A(t_1)$ and the output signal from the measurement cell 40 is set as $S_B(t_2)$, the formula 1 showing the cross-correlation of these can be expressed as follows.

$$S_B(t_2 - T) \cdot S_A(t_1) \cdots \text{(formula 1)}$$

In addition, the velocity meter 10 of the present embodiment is made so as to be able to estimate the revolution speed of the engine 20 based on the power spectrum of the gas temperature or the gas concentration obtained by Fast Fourier Transformation (FFT) of the output of the measurement cell 30 (or measurement cell 40), and thus also has a function as an engine tachometer.

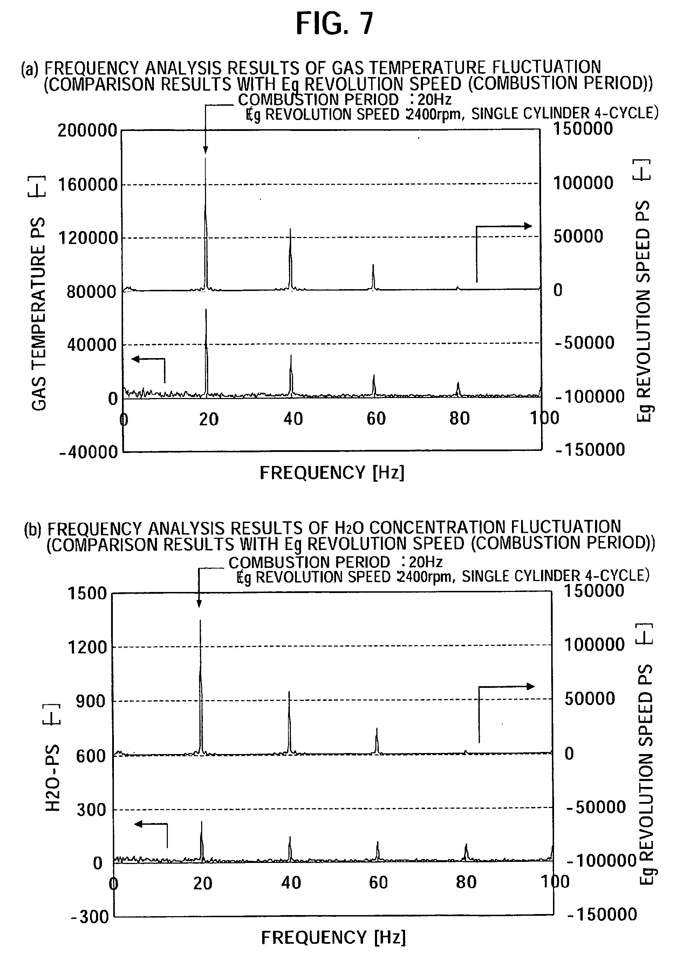

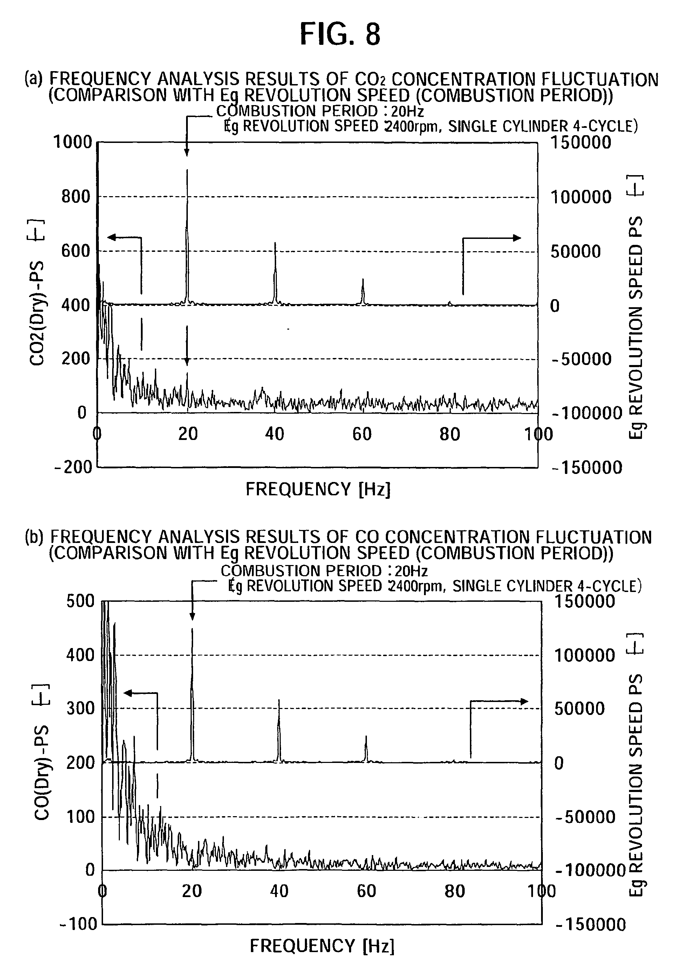

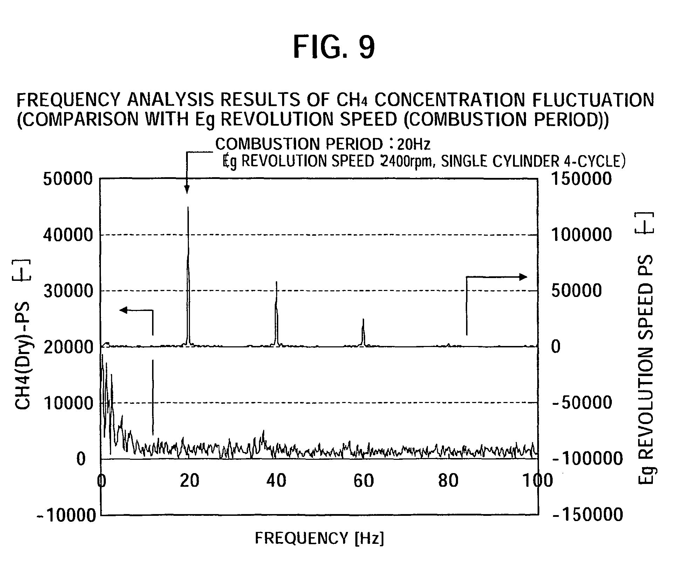

FIGS. 7 to 9 are charts showing power spectra of the gas temperature or gas concentration and power spectra of the revolution speed (2400 $min^{-1}$) of the engine by comparison. FIGS. 7(a) and (b) show the power spectra of gas temperature and $H_2O$ concentration and power spectra of the revolution speed of the engine by comparison, respectively. FIGS. 8(a) and (b) show power spectra of $CO_2$ concentration and CO concentration and power spectra of the revolution speed of the engine by comparison, respectively. FIG. 9 shows a power spectrum of the $CH_4$ concentration and a power spectrum of the revolution speed of the engine by comparison.

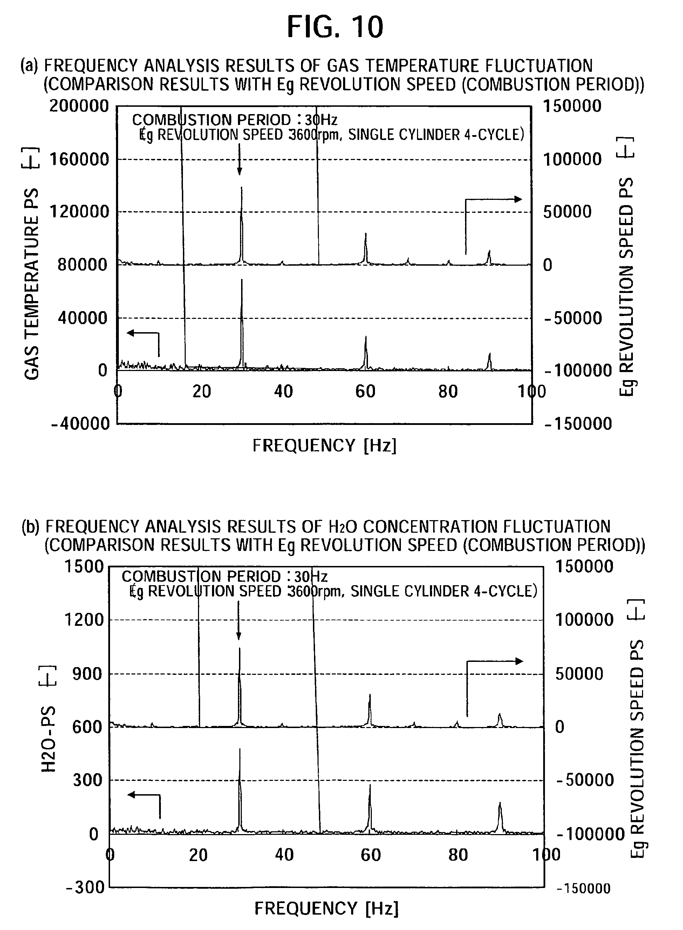

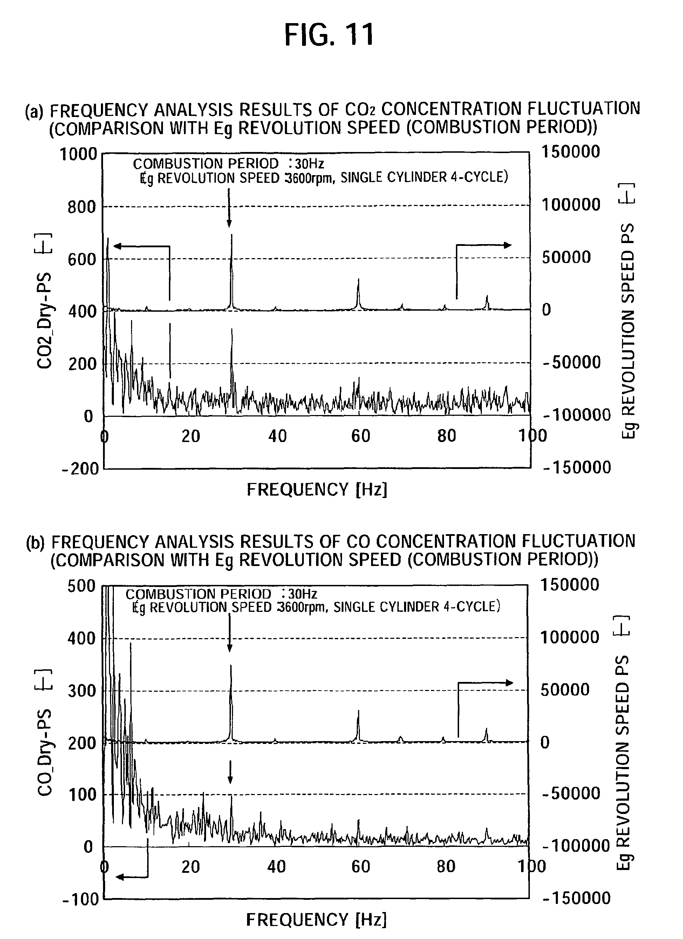

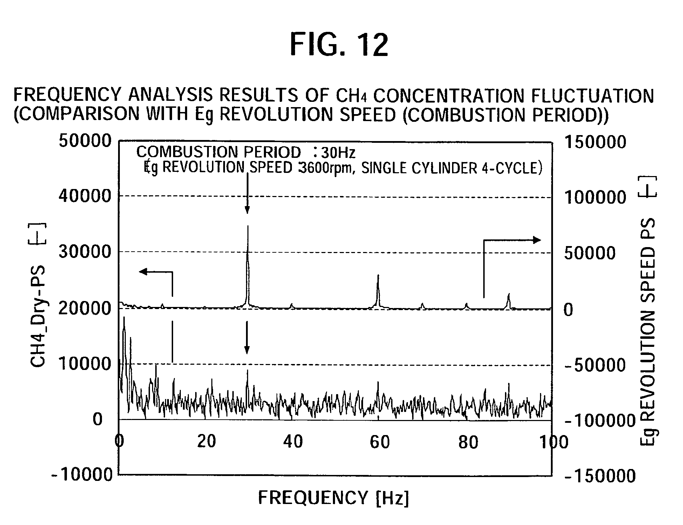

FIGS. 10 to 12 are charts showing power spectra of the gas temperature or gas concentration and power spectra of the revolution speed (3600 $min^{-1}$) of the engine by comparison. FIGS. 10(a) and (b) show power spectra of gas temperature and $H_2O$ concentration and power spectra of the revolution speed of the engine by comparison, respectively. FIGS. 11(a) and (b) show power spectra of $CO_2$ concentration and CO concentration and power spectra of the revolution speed of the engine by comparison, respectively. FIG. 12 shows a power spectrum of $CH_4$ concentration and a power spectrum of the revolution speed of the engine by comparison.

For example, as shown in FIG. 7(a), the frequency (approximately 20 Hz) at which a peak of the power spectrum of the gas temperature appears and a frequency (approximately 20 Hz) at which a peak of the power spectrum of the combustion period of the engine 20 appears are corresponding, and thus the revolution speed of the engine can be estimated by the peak of the power spectrum of the gas temperature. For example, if the peak frequency of the gas temperature from the output of the measurement cell 30 is known to be approximately 20 Hz, even if the power spectrum of the engine revolution speed is temporarily unclear, the peak frequency of the engine revolution speed can be estimated to also be approximately 20 Hz. Since the crank shaft of a four-cycle engine revolves twice per one combustion cycle, if the combustion cycle (combustion period) of the engine 20 can be obtained, the revolution speed of the engine 20 can also be obtained. In this case, since the combustion cycle is 20 Hz, the engine revolution speed can be estimated as 2400 revolutions per minute (2400 $min^{-1}$).

In addition, in the above example, although the engine revolution speed was estimated based on the gas temperature, it is not limited thereto, and the combustion cycle of the engine 20 can similarly be estimated from the peak of the power spectrum of the concentration of any gas detectable by the measurement cell 30. As shown in FIGS. 7(b) and 8(a), the peaks of the power spectrum of the $H_2O$ concentration and $CO_2$ concentration obtained based on the output of the measurement cell 30 appear at approximately 20 Hz, similarly to the gas temperature. Therefore, the engine revolution speed (2400 $min^{-1}$) can also be estimated from these gas concentrations.

Even in a case in which the engine revolution speed is 3600 $min^{-1}$, the ability to estimate the engine revolution speed from the power spectra of outputs (gas temperature, gas concentrations) from the measurement cell 30 is evident from FIGS. 10 to 12. For example, as shown in FIG. 11(a), if the peak of the power spectrum of the gas temperature is approximately 30 Hz, even if the power spectrum of the engine revolution speed is temporarily unclear, the peak frequency of the engine revolution speed can also be estimated to be approximately 30 Hz, and the engine revolution speed can be estimated to be 3600 $min^{-1}$.

It should be noted that, in a case of the revolution speed being 2400 $min^{-1}$, since it is difficult to specify the peak frequency of the power spectra of the CO concentration and $CH_4$ concentration, the parameter used in order to estimate the revolution speed of the engine 20 may be classified into appropriate categories according to the anticipated engine revolution speed. For example, a clear peak may appear in the power spectra of the $H_2O$ concentration and $CO_2$ concentration also at 2400 $min^{-1}$, and thus it is possible to estimate the engine revolution speed.

According to the velocity meter 10 of the first embodiment explained above, the following effects can be obtained.

(1) The velocity meter 10 focuses on there being a time shift in the outputs of the pair of measurement cells 30 and 40. The measurement cells 30 and 40 each use high-response elements that can detect in detail a change in the gas temperature and gas concentration of exhaust gas; therefore, the calculating section 50 can directly obtain a flow velocity of exhaust gas from the shift in time of the outputs thereof. Therefore, the flow velocity of exhaust gas can be measured in detail.

(2) For example, in measuring the temperature of the exhaust gas, although it has been considered to provide a thermocouple inside the exhaust plumbing, in this case, there is a possibility of obstructing the flow of exhaust gas, and there is a possibility that accurate measurement of the exhaust gas flow velocity will become difficult. In contrast, the measurement cells 30 and 40 of the present embodiment are of a type that irradiates laser light into the exhaust gas; therefore, the flow velocity of the exhaust gas can be accurately measured while not causing drag on the exhaust gas.

(3) The mass of the exhaust gas can be obtained based on the concentration and density of each gas contained in the exhaust gas; therefore, the emission amount per time such as of $CO_2$ contained in the exhaust gas can be obtained on a mass basis from the flow velocity of the exhaust gas.

(4) It is convenient since the revolution speed of the engine 20 can be estimated based on the temperature change and concentration change of the exhaust gas.

Embodiment of the invention

Next, a velocity meter 110, which is an embodiment of a fluid measuring device according to the present invention, will be explained. In this embodiment and other embodiments described later, the same reference symbols or reference symbols consistent with the last digits thereof are assigned to portions fulfilling functions that are similar to the first embodiment described above, and explanations and drawings that would be redundant are omitted where appropriate.

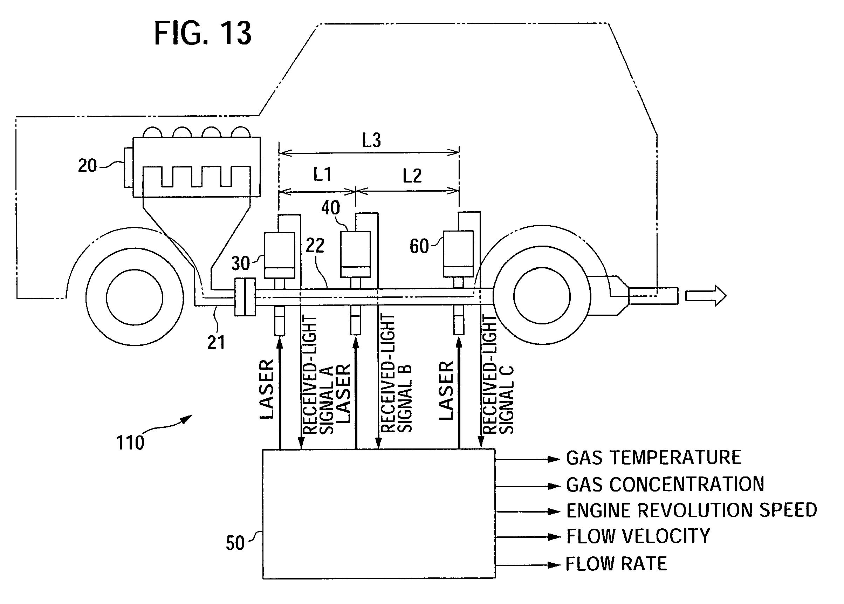

FIG. 13 is a view showing the velocity meter 110 and the engine 20 of the embodiment of the invention.

The velocity meter 10 of the first embodiment includes two measurement cells 30 and 40 in the exhaust plumbing 22, whereas three measurement cells 30, 40, and 60 are disposed in this sequence from an upstream side in the exhaust plumbing 22 to a downstream side in the velocity meter 110 of the embodiment of the invention. The measurement cell 30 and the measurement cell 40 are disposed with a distance L1, and the measurement cell 40 and the measurement cell 60 are disposed with a distance L2, which is longer than the distance L1. In addition, the reference symbol L3 is explained as being assigned to a length (L1 + L2) between the measurement cell 30 and the measurement cell 60. The calculating section 50 pairs two among these measurement cells 30, 40, and 60, and measures the flow velocity of exhaust gas based on the distance between the two measurement cells selected.

The reason for providing the three measurement cells 30, 40, and 60 is explained below. As explained in the aforementioned first embodiment, the calculating section 50 obtains the flow velocity of exhaust gas by comparing like waveforms showing outputs of the pair of measurement cells. Herein, for example, in a case of the exhaust gas flow velocity being low velocity, even though the output of the measurement cell 30 on an upstream side has undergone one cycle, the output waveform of the measurement cell 40 on a downstream side does not stand out, comparison of like waveform data becomes difficult, and there is a possibility for the precision of the flow velocity measurement to decrease. Such a flaw can be solved by making the pair of measurement cells in close proximity; however, in a case of the time resolution of the measurement cell being constant, if like measurement cells are made in very close proximity, there is a possibility that the precision of the flow velocity measurement will similarly decrease. Therefore, it is better that the distance between the engine 20 and the measurement cell 40 be spaced apart to some extent.

In this way, measurement of the flow velocity may become difficult if the distance of the measurement cell of the pair is spaced too far apart or is too close depending on the velocity of the exhaust gas, which is the measurement target. Consequently, the velocity meter 110 of the present embodiment is provided with the three measurement cells 30, 40, and 60 in the exhaust plumbing 22, and is made to have three variations (L1, L2, and L3) in distance between like measurement cells of a pair. The measurer can precisely measure the flow velocity of the exhaust gas by selecting any of the measurement cells 30, 40, and 60 according to the anticipated velocity of the exhaust gas.

According to the velocity meter 110 of the embodiment of the invention explained above, in addition to the effects obtained by the velocity meter 10 of the first embodiment, an effect is obtained in that the flow velocity of the exhaust gas can be measured in detail irrespective of the flow velocity of the exhaust gas.

Second Embodiment

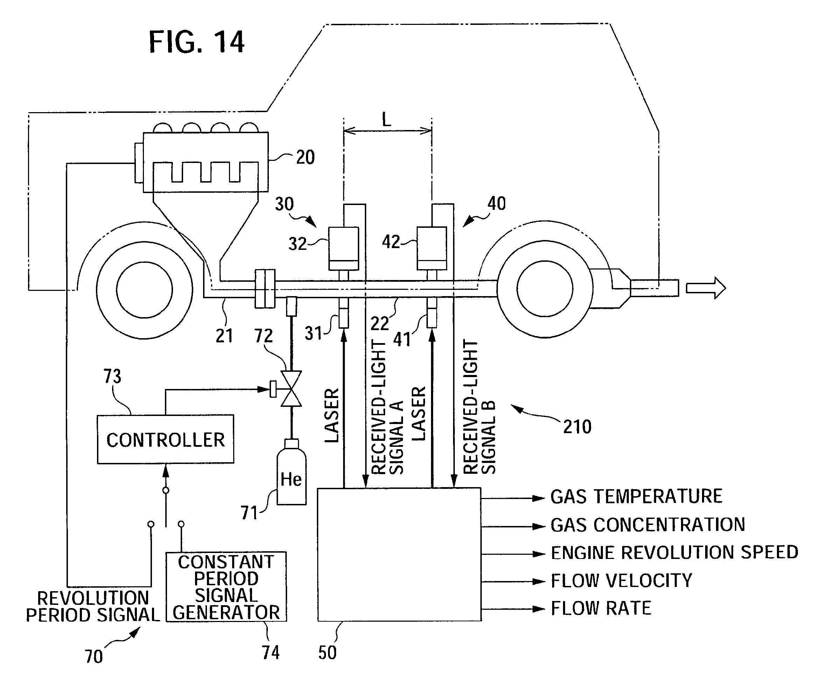

Next, a velocity meter 210, which is a second embodiment of a fluid measuring device useful for understanding the present invention, will be explained. FIG. 14 is a view showing the velocity meter 210 and the engine 20 of the second embodiment. The velocity meter 210 of the second embodiment includes the two measurement cells 30 and 40 in the exhaust plumbing 22, similarly to the first embodiment.

In addition, the velocity meter 210 includes a gas supply device 70, which is in the exhaust plumbing 22, and supplies helium gas, which is an inert gas, to an upstream side (engine 20 side) of the measurement cell 30. The gas supply device 70 includes a compressed gas cylinder 71 that is filled with helium gas, and a solenoid valve 72 is provided in the piping that connects this compressed gas cylinder 71 with the exhaust plumbing 22. The gas supply device 70 includes a valve timing controller 73 (hereinafter referred to as controller 73) that controls the open-close timing of the solenoid valve 72, and a signal that has been synchronized with the revolution period of the engine 20 and a periodic signal transmitted by the constant period signal generator 74 are selectively input to this controller 73. The controller 73 controls the solenoid valve 72 according to these signals, and switches supply/no supply of helium gas to the exhaust gas at a constant frequency.

In the velocity meter 210 of the second embodiment, the gas concentrations such as of $H_20$, CO, and $CO_2$ contained in the exhaust gas decrease relatively depending on helium gas being supplied to the exhaust gas flowing inside the exhaust plumbing 22. Consequently, fluctuation in the gas concentrations also becomes periodic in response to supply/no supply of helium gas changing periodically. In this way, the velocity meter 210 of the second embodiment supplies helium gas as a fluctuation marker gas to the exhaust gas; therefore, even in a case in which the extent of change in a parameter (temperature and gas concentration contained in exhaust gas) relating to the exhaust gas is temporarily small, or in a case in which there is substantially no change in a parameter, the flow velocity can be measured reliably. In addition, in a case in which the waveform data showing a change in a parameter relating to the exhaust gas, for example, is a waveform prepared so as to be close to a sine wave, although there is a possibility for determining the time shift becoming difficult, since the waveform is upset by supplying helium gas at a constant frequency, the time shift can be determined easily.

It should be noted that, although fluctuation in a gas concentration such as for $CO_2$ was detected in the present embodiment by measurement cells similar to the first embodiment, it is not limited thereto, and the periodic concentration change in helium gas itself may be detected. Even in this case, the flow velocity of the exhaust gas can be measured in detail from the time shift of outputs of the measurement cells of the pair. In addition, although the present embodiment was configured to additionally provide the gas supply device 70 to the velocity meter 10 of the first embodiment, the gas supply device 70 may be additionally provided to the velocity meter 110 of the embodiment of the invention.

Alternative Embodiments

The present invention is not limited to the embodiments explained above; various modifications and alterations such as illustrated below are possible, and these are also included within the technical scope of the present invention.

(1) The measurement target of the fluid measuring device of the present invention was exhaust gas emitted from a gasoline engine in the embodiments; however, it is not limited thereto, and may be another fluid such as the exhaust gas emitted from an incinerator or steam supplied to a turbine of a thermal power station. In addition, the fluid of the measurement target is not limited to a gaseous matter (gas), and may be a liquid.

(2) The embodiments used measurement cells applying laser absorption spectroscopy as detecting sections; however, the detecting sections are not limited thereto, for example, and may employ a well-known thin-film temperature sensor and absorption spectroscopy - scattering spectroscopy - emission spectroscopy using light other than laser, and the flow velocity and flow rate of the fluid may be measured based on the output (temperature change, etc.) of these sensors.

(3) The embodiments measured the flow velocity based on a phase difference of waveform data generated based on the outputs of the measurement cells; however, it is not limited thereto, and the flow velocity may be measured directly using an analog signal output from the measurement cells. In this case, since the responsiveness of detection is improved, even in a case in which the engine revolution speed is higher than in the embodiments and the flow velocity of the exhaust gas is higher, the flow velocity can be measured in detail.

(4) The embodiment of the invention is provided with three measurement cells; however, the number of measurement cells is not limited thereto, and may be four or more.

(5) In the second embodiment, the gas concentrations contained in the exhaust gas decrease relatively depending on an inert gas being supplied into the exhaust gas; however, it is not limited thereto, and a gas that is the same as a gas contained in the exhaust gas may be supplied periodically to cause the gas concentration to increase.

## Claims

1. A fluid measuring device (110) comprising:

   a first detecting section (30) disposed on a channel (22) in which fluid flows for detecting a parameter that changes in response to a change in a state of the fluid;
   a second detecting section (40) disposed in a state separated by a first distance (L1) from the first detecting section (30) on the channel (22) for detecting said parameter;
   a third detecting section (60) disposed in a state separated by a second distance (L2), which is longer than the first distance (L1), from the second detecting section (40) on the channel (22), for detecting said parameter; and
   a calculating section (50) for determining, according to an anticipated flow velocity of the fluid, a combination of a pair (30. 40; 40, 60; 30,60) of two among the three detecting sections (30, 40, 60), and for calculating the flow velocity of the fluid based on a time shift in a change in said parameter detected by the selected pair (30,40; 40,60; 30,50) of detecting sections (30,40, 60) and on the distance (L1; L2; L3) along the channel (22) between the detecting sections of the selected pair.

2. A fluid measuring device according to claim 1,
   wherein the calculating section (50) calculates a flow rate of the fluid based on the flow velocity of the fluid and a cross-sectional area of the channel.

3. A fluid measuring device according to claim 1 or 2,
   wherein at least one of a temperature of the fluid, a concentration of a substance contained in the fluid, and an intensity of light absorbed, scattered, and irradiated by the substance is included in the parameter that changes in response to a change in a state of the fluid.

4. A fluid measuring device according to any one of claims 1 to 3,
   wherein the detecting section includes an irradiation portion (31) that irradiates laser light into the fluid and a light-receiving portion (32) that receives the laser light having transmitted or scattered through the fluid, and detects the parameter based on an intensity ratio of irradiated light irradiated by the irradiation portion and transmitted light received by the light-receiving portion.

5. A fluid measuring device according to any one of claims 1 to 4,
   wherein the calculating section evaluates a time shift in a change in a parameter by comparing like waveform signals, based on the change in the parameter detected by the pair of detecting sections.

6. A fluid measuring device according to any one of claims 1 to 5,
   wherein the calculating section evaluates the time shift in the change in the parameter by calculating a correlation of the change in the parameter detected by the pair of detecting sections.

7. A fluid measuring device according to any one of claims 1 to 6,
   comprising a means, which is disposed in the channel in which the fluid flows upstream of the detecting sections, for causing a concentration of a substance contained in the fluid to fluctuate.

## Patentansprüche

1. Fluidmessgerät (110), welches aufweist:

   einen ersten Erfassungsabschnitt (30), der an einem Kanal (22), in dem ein Fluid strömt, angeordnet ist, um einen Parameter, der sich als Reaktion auf eine Veränderung in einem Zustand des Fluids verändert, zu erfassen,
   einen zweiten Erfassungsabschnitt (40), der in einer um einen ersten Abstand (L1) von dem ersten Erfassungsabschnitt (30) getrennten Lage an dem Kanal (22) angeordnet ist, um den Parameter zu erfassen,
   einen dritten Erfassungsabschnitt (60), der in einer um einen zweiten Abstand (L2), der länger ist als der erste Abstand (L1), von dem zweiten Erfassungsabschnitt (40) getrennten Lage an dem Kanal (22) angeordnet ist, um den Parameter zu erfassen, und

einen Berechnungsabschnitt (50), um entsprechend einer zu erwartenden Durchflussgeschwindigkeit des Fluids eine Kombination aus einem Paar (30, 40; 40, 60; 30, 60) von zwei unter den drei Erfassungsabschnitten (30, 40, 60) festzulegen und um die Durchflussgeschwindigkeit des Fluids auf der Grundlage einer Zeitverschiebung bei einer Veränderung bei dem durch das ausgewählte Paar (30, 40; 40, 60; 30, 60) von Erfassungsabschnitten (30, 40, 60) erfassten Parameter und des Abstandes (L1; L2; L3) längs des Kanals (22) zwischen den Erfassungsabschnitten des ausgewählten Paares zu berechnen.

**2.** Fluidmessgerät nach Anspruch 1,
wobei der Berechnungsabschnitt (50) eine Durchflussmenge des Fluids auf der Grundlage der Durchflussgeschwindigkeit des Fluids und einer Querschnittsfläche des Kanals berechnet.

**3.** Fluidmessgerät nach Anspruch 1 oder 2,
wobei die Temperatur des Fluids und/oder eine Konzentration einer in dem Fluid enthaltenen Substanz und/oder eine Intensität von durch die Substanz absorbiertem, gestreutem und abgestrahltem Licht in dem Parameter, der sich als Reaktion auf eine Veränderung in einem Zustand des Fluids verändert, enthalten ist.

**4.** Fluidmessgerät nach einem der Ansprüche 1 bis 3,
wobei der Erfassungsabschnitt einen Abstrahlungsabschnitt (31), der Laserlicht in das Fluid abstrahlt, und einen Licht aufnehmenden Abschnitt (32) aufweist, der das Laserlicht empfängt, das durch das Fluid durchgelassen oder gestreut worden ist, und den Parameter auf der Grundlage eines Intensitätsverhältnisses des abgestrahlten Lichts, das durch den Abstrahlungsabschnitt abgestrahlt wird, und des durchgelassenen Lichts, das durch den Licht aufnehmenden Abschnitt empfangen wird.

**5.** Fluidmessgerät nach einem der Ansprüche 1 bis 4,
wobei der Berechnungsabschnitt eine Zeitverschiebung bei einer Veränderung bei einem Parameter berechnet, durch das Vergleichen ähnlicher Wellenformsignale, auf der Grundlage der Veränderung bei dem durch das Paar von Erfassungsabschnitten erfassten Parameters.

**6.** Fluidmessgerät nach einem der Ansprüche 1 bis 5,
wobei der Berechnungsabschnitt die Zeitverschiebung bei der Veränderung bei dem Parameter berechnet, durch Berechnen einer Korrelation der Veränderung bei dem durch das Paar von Erfassungsabschnitten erfassten Parameters.

**7.** Fluidmessgerät nach einem der Ansprüche 1 bis 6,
das ein Mittel umfasst, das in dem Kanal, in dem ein Fluid strömt, stromaufwärts von den Erfassungsabschnitten angeordnet ist, um zu bewirken, dass eine Konzentration einer in dem Fluid enthaltenen Substanz schwankt.

## Revendications

**1.** Dispositif de mesure de fluide (110) comprenant :

une première section de détection (30) disposée sur un canal (22) dans lequel le fluide s'écoule permettant de détecter un paramètre qui change en réponse à un changement de l'état du fluide ;
une deuxième section de détection (40) disposée dans un état séparé par une première distance (L1) par rapport à la première section de détection (30) sur le canal (22) permettant de détecter ledit paramètre ;
une troisième section de détection (60) disposée dans un état séparé par une seconde distance (L2), qui est plus longue que la première distance (L1), par rapport à la deuxième section de détection (40) sur le canal (22), permettant de détecter ledit paramètre ; et
une section de calcul (50) permettant de déterminer, selon une vitesse d'écoulement anticipée du fluide, une combinaison d'une paire (30, 40 ; 40, 60 ; 30, 60) de deux parmi les trois sections de détection (30, 40, 60), et à calculer la vitesse d'écoulement du fluide sur la base d'un décalage temporel d'un changement dudit paramètre détecté par la paire sélectionnée (30, 40 ; 40, 60 ; 30, 50) des sections de détection (30, 40, 60) et de la distance (L1 ; L2 ; L3) le long du canal (22) entre les sections de détections de la paire sélectionnée.

**2.** Dispositif de mesure de fluide selon la revendication 1,
dans lequel la section de calcul (50) calcule un débit du fluide sur la base de la vitesse d'écoulement du fluide et d'une zone en coupe transversale du canal.

**3.** Dispositif de mesure de fluide selon la revendication 1 ou 2, dans lequel au moins un élément parmi une température du fluide, une concentration d'une substance contenue dans le fluide et une intensité de lumière absorbée, dispersée et irradiée par la substance est inclus dans le paramètre qui change en réponse à un changement d'un état du fluide.

**4.** Dispositif de mesure de fluide selon l'une quelconque des revendications 1 à 3, dans lequel la section de détection comprend une partie d'irradiation (31) qui irradie une lumière laser dans le fluide et une partie de réception de lumière (32) qui reçoit la lumière laser transmise ou dispersée à travers le fluide et détecte le paramètre sur la base d'un rapport d'intensité de la lumière irradiée irradiée par la partie d'irradiation et de la lumière transmise reçue par la partie de réception de lumière.

**5.** Dispositif de mesure de fluide selon l'une quelconque des revendications 1 à 4, dans lequel la section de calcul évalue un décalage temporel d'un changement d'un paramètre en comparant des signaux en forme d'onde similaires sur la base du changement du paramètre détecté par la paire de sections de détection.

**6.** Dispositif de mesure de fluide selon l'une quelconque des revendications 1 à 5, dans lequel la section de calcul évalue le décalage temporel du changement du paramètre en calculant une corrélation du changement du paramètre détecté par la paire de sections de détection.

**7.** Dispositif de mesure de fluide selon l'une quelconque des revendications 1 à 6, comprenant un moyen qui est disposé dans le canal dans lequel le fluide s'écoule en amont des sections de détection pour entrainer la fluctuation d'une concentration d'une substance contenue dans le fluide.

FIG. 1
GAS TEMPERATURE
GAS CONCENTRATION
ENGINE REVOLUTION SPEED
FLOW VELOCITY
FLOW RATE
RECEIVED-LIGHT SIGNAL B
LASER
RECEIVED-LIGHT SIGNAL A
LASER
L
10
20
21
22
30
31
32
40
41
42
50

# FIG. 2

30
35
ELECTRICAL SIGNAL CABLE
(FOR RECEIVED-LIGHT
SIGNAL TRANSMISSION)
34
32
PURGE GAS
MEASUREMENT TARGET
(GAS, ETC.)
LASER FOR
MEASUREMENT
22
PURGE GAS
31
33
OPTICAL FIBER
(LASER TRANSMISSION
FOR MEASUREMENT)

# FIG. 3

(a) 4-SECOND MEASUREMENT RESULTS

GAS TEMPERATURE
CO2 CONCENTRATION
H2O CONCENTRATION
CO CONCENTRATION
GAS TEMPERATURE [K]
GAS CONCENTRATION [%]
1000
800
600
400
200
0
20.0
16.0
12.0
8.0
4.0
0.0
2
3
4
5
6
MEASUREMENT TIME PERIOD [sec]


(b) 1-SECOND MEASUREMENT RESULTS

GAS TEMPERATURE
H2O CONCENTRATION
GAS TEMPERATURE [K]
H2O CONCENTRATION [%]
900
800
700
600
500
13.5
12.5
11.5
10.5
9.5
3.5
3.7
3.9
4.1
4.3
4.5
MEASUREMENT TIME PERIOD [sec]


- Eg REVOLUTION SPEED : 2400 rpm → COMBUSTION PERIOD : 20 Hz $INGLE CYLINDER 4-CYCLE)
- TH APERTURE : 100 %
- TORQUE : 10.1 Nm

# FIG. 4

(a) 4-SECOND MEASUREMENT RESULTS

GAS TEMPERATURE
CO2 CONCENTRATION
H2O CONCENTRATION
CO CONCENTRATION
1000
800
600
400
200
0
20.0
16.0
12.0
8.0
4.0
0.0
GAS TEMPERATURE [K]
GAS CONCENTRATION [%]
2
3
4
5
6
MEASUREMENT TIME PERIOD [sec]

(b) 0.6-SECOND MEASUREMENT RESULTS

GAS TEMPERATURE
H2O CONCENTRATION
1000
900
800
700
600
13.0
12.0
11.0
10.0
9.0
GAS TEMPERATURE [K]
GAS CONCENTRATION [%]
3.7
3.9
4.1
4.3
MEASUREMENT TIME PERIOD [sec]

·Eg REVOLUTION SPEED : 3600 rpm → COMBUSTION PERIOD 30 Hz (SINGLE CYLINDER 4-CYCLE)
·TH APERTURE : 100 %
·TORQUE : 8.8 Nm

# FIG. 5

(a)

EXAMPLE MEASUREMENT SIGNALS OF TEMPERATURES 1 AND 2 FROM TWO DETECTORS 2400r/min
900
850
800
750
OUTPUT OF MEASUREMENT CELL 30
TEMPERATURE 1 [℃]
TEMPERATURE 2 [℃]
TIME SHIFT
ΔT
900
850
800
750
700
OUTPUT OF MEASUREMENT CELL 40
4
4.1
4.2
4.3
4.4
4.5

(b)

EXAMPLE MEASUREMENT SIGNALS OF H2O CONCENTRATIONS 1 AND 2 FROM TWO DETECTORS 2400r/min
11.5
11.0
10.5
10.0
9.5
OUTPUT OF MEASUREMENT CELL 30
ΔT
TIME SHIFT
H2O CONCENTRATION 1 [%]
H2O CONCENTRATION 2 [%]
11.5
11.0
10.5
10.0
9.5
OUTPUT OF MEASUREMENT CELL 40
4
4.1
4.2
4.3
4.4
4.5

FIG. 6
(a)
EXAMPLE MEASUREMENT SIGNALS OF TEMPERATURES 1 AND 2 FROM TWO DETECTORS 3600r/min

1000
900
800
OUTPUT OF MEASUREMENT CELL 30
ΔT
TIME SHIFT
TEMPERATURE 1 [℃]
TEMPERATURE 2 [℃]
1050
950
850
750
OUTPUT OF
MEASUREMENT CELL 40
3.6
3.7
3.8
3.9

(b)
EXAMPLE MEASUREMENT SIGNALS OF H2O CONCENTRATIONS 1 AND 2 FROM TWO DETECTORS 3600r/min

11.5
10.5
9.5
OUTPUT OF MEASUREMENT
CELL 30
H2O CONCENTRATION 1 [%]
H2O CONCENTRATION 2 [%]
TIME SHIFT
ΔT
11.0
10.0
9.0
OUTPUT OF
MEASUREMENT CELL 40
3.6
3.7
3.8
3.9

# FIG. 7

(a) FREQUENCY ANALYSIS RESULTS OF GAS TEMPERATURE FLUCTUATION
(COMPARISON RESULTS WITH Eg REVOLUTION SPEED (COMBUSTION PERIOD))
COMBUSTION PERIOD : 20Hz
(Eg REVOLUTION SPEED 2400rpm, SINGLE CYLINDER 4-CYCLE)
200000
160000
120000
80000
40000
0
-40000
GAS TEMPERATURE PS [-]
150000
100000
50000
0
-50000
-100000
-150000
Eg REVOLUTION SPEED PS [-]
0
20
40
60
80
100
FREQUENCY [Hz]

(b) FREQUENCY ANALYSIS RESULTS OF H2O CONCENTRATION FLUCTUATION
(COMPARISON RESULTS WITH Eg REVOLUTION SPEED (COMBUSTION PERIOD))
COMBUSTION PERIOD : 20Hz
(Eg REVOLUTION SPEED 2400rpm, SINGLE CYLINDER 4-CYCLE)
1500
1200
900
600
300
0
-300
H2O-PS [-]
150000
100000
50000
0
-50000
-100000
-150000
Eg REVOLUTION SPEED PS [-]
0
20
40
60
80
100
FREQUENCY [Hz]

# FIG. 8

(a) FREQUENCY ANALYSIS RESULTS OF CO2 CONCENTRATION FLUCTUATION
(COMPARISON WITH Eg REVOLUTION SPEED (COMBUSTION PERIOD))
COMBUSTION PERIOD : 20Hz
(Eg REVOLUTION SPEED 2400rpm, SINGLE CYLINDER 4-CYCLE)
1000
800
600
400
200
0
-200
150000
100000
50000
0
-50000
-100000
-150000
0
20
40
60
80
100
CO2(Dry)-PS [-]
Eg REVOLUTION SPEED PS [-]
FREQUENCY [Hz]

(b) FREQUENCY ANALYSIS RESULTS OF CO CONCENTRATION FLUCTUATION
(COMPARISON WITH Eg REVOLUTION SPEED (COMBUSTION PERIOD))
COMBUSTION PERIOD : 20Hz
(Eg REVOLUTION SPEED 2400rpm, SINGLE CYLINDER 4-CYCLE)
500
400
300
200
100
0
-100
150000
100000
50000
0
-50000
-100000
-150000
0
20
40
60
80
100
CO(Dry)-PS [-]
Eg REVOLUTION SPEED PS [-]
FREQUENCY [Hz]

# FIG. 9

FREQUENCY ANALYSIS RESULTS OF CH4 CONCENTRATION FLUCTUATION
(COMPARISON WITH Eg REVOLUTION SPEED (COMBUSTION PERIOD))
COMBUSTION PERIOD : 20Hz
(Eg REVOLUTION SPEED 2400rpm, SINGLE CYLINDER 4-CYCLE)
CH4(Dry)-PS [-]
Eg REVOLUTION SPEED PS [-]
50000
40000
30000
20000
10000
0
-10000
150000
100000
50000
0
-50000
-100000
-150000
0
20
40
60
80
100
FREQUENCY [Hz]

# FIG. 10

(a) FREQUENCY ANALYSIS RESULTS OF GAS TEMPERATURE FLUCTUATION
(COMPARISON RESULTS WITH Eg REVOLUTION SPEED (COMBUSTION PERIOD))
COMBUSTION PERIOD : 30Hz
(Eg REVOLUTION SPEED 3600rpm, SINGLE CYLINDER 4-CYCLE)
GAS TEMPERATURE PS [-]
Eg REVOLUTION SPEED PS [-]
200000
160000
120000
80000
40000
0
-40000
150000
100000
50000
0
-50000
-100000
-150000
0
20
40
60
80
100
FREQUENCY [Hz]

(b) FREQUENCY ANALYSIS RESULTS OF H2O CONCENTRATION FLUCTUATION
(COMPARISON RESULTS WITH Eg REVOLUTION SPEED (COMBUSTION PERIOD))
COMBUSTION PERIOD : 30Hz
(Eg REVOLUTION SPEED 3600rpm, SINGLE CYLINDER 4-CYCLE)
H2O-PS [-]
Eg REVOLUTION SPEED PS [-]
1500
1200
900
600
300
0
-300
150000
100000
50000
0
-50000
-100000
-150000
0
20
40
60
80
100
FREQUENCY [Hz]

# FIG. 11

(a) FREQUENCY ANALYSIS RESULTS OF CO2 CONCENTRATION FLUCTUATION
(COMPARISON WITH Eg REVOLUTION SPEED (COMBUSTION PERIOD))
COMBUSTION PERIOD :30Hz
(Eg REVOLUTION SPEED 3600rpm, SINGLE CYLINDER 4-CYCLE)
1000
800
600
400
200
0
-200
150000
100000
50000
0
-50000
-100000
-150000
0
20
40
60
80
100
CO2_Dry-PS [-]
Eg REVOLUTION SPEED PS [-]
FREQUENCY [Hz]

(b) FREQUENCY ANALYSIS RESULTS OF CO CONCENTRATION FLUCTUATION
(COMPARISON WITH Eg REVOLUTION SPEED (COMBUSTION PERIOD))
COMBUSTION PERIOD :30Hz
(Eg REVOLUTION SPEED 3600rpm, SINGLE CYLINDER 4-CYCLE)
500
400
300
200
100
0
-100
150000
100000
50000
0
-50000
-100000
-150000
0
20
40
60
80
100
CO_Dry-PS [-]
Eg REVOLUTION SPEED PS [-]
FREQUENCY [Hz]

# FIG. 12

FREQUENCY ANALYSIS RESULTS OF CH4 CONCENTRATION FLUCTUATION
(COMPARISON WITH Eg REVOLUTION SPEED (COMBUSTION PERIOD))
COMBUSTION PERIOD : 30Hz
(Eg REVOLUTION SPEED 3600rpm, SINGLE CYLINDER 4-CYCLE)
CH4_Dry-PS [-]
Eg REVOLUTION SPEED PS [-]
FREQUENCY [Hz]
50000
40000
30000
20000
10000
0
-10000
150000
100000
50000
0
-50000
-100000
-150000
0
20
40
60
80
100

FIG. 13
GAS TEMPERATURE
GAS CONCENTRATION
ENGINE REVOLUTION SPEED
FLOW VELOCITY
FLOW RATE
RECEIVED-LIGHT SIGNAL C
LASER
RECEIVED-LIGHT SIGNAL B
LASER
RECEIVED-LIGHT SIGNAL A
LASER
L1
L2
L3
20
21
22
30
40
50
60
110

FIG. 14
20
30
32
31
40
42
41
22
21
L
LASER
RECEIVED-LIGHT
SIGNAL A
LASER
RECEIVED-LIGHT
SIGNAL B
210
50
GAS TEMPERATURE
GAS CONCENTRATION
ENGINE REVOLUTION SPEED
FLOW VELOCITY
FLOW RATE
He
71
72
73
CONTROLLER
CONSTANT PERIOD SIGNAL GENERATOR
74
REVOLUTION PERIOD SIGNAL
70

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3943853 B
- US 4201083 A
- DE 102006027422 A1
- JP 59048621 A
- JP 2007333655 A
- JP 2004170357 A